# EUROPEAN PATENT SPECIFICATION

(11) **EP 4 566 688 B1**
(45) Date of publication and mention of the grant of the patent: **19.08.2026**
(21) Application number: 24213592.9
(22) Date of filing: 18.11.2024
(51) Int. Cl.: B01D 3/08

(54) **AUTOMATIC EVAPORATOR SYSTEM**
AUTOMATISCHES VERDAMPFERSYSTEM
SYSTÈME D'ÉVAPORATEUR AUTOMATIQUE

(30) Priority: 04.12.2023 KR 20230173665
(43) Date of publication of application: 11.06.2025
(73) Proprietor: Samsung Electronics Co., Ltd., Suwon-si, Gyeonggi-do 16677 (KR)
(72) Inventor: CHOI, Hyun Do, 16678 Suwon-si (KR); KIM, Bosung, 16678 Suwon-si (KR); KIM, Seungyeon, 16678 Suwon-si (KR); SEO, Seoungjin, 16678 Suwon-si (KR); CHANG, Minsu, 16678 Suwon-si (KR); JANG, Jun-Won, 16678 Suwon-si (KR); JEON, Hyunjeong, 16678 Suwon-si (KR); HONG, Wooram, 16678 Suwon-si (KR)
(74) Representative: Elkington and Fife LLP

(56) References cited:
- CN-B- 106 794 386
- CN-U- 217 041 349
- US-A1- 2010 193 140
- US-A1- 2014 238 620

## Description

### FIELD OF THE INVENTION

The disclosure relates to an automatic evaporator system.

### BACKGROUND OF THE INVENTION

The boiling temperature of a substance may be used to separate it from a mixture of substances. Each substance that forms a mixture has a different boiling temperature. Thus, by heating the mixture in a liquid state to a temperature between the boiling temperatures of the substances, each substance is evaporated and separated sequentially from a substance having a low boiling temperature. This distillation technology has been widely used in various technical fields.

Information included in this Background section has already been known to or derived by the inventors before or during the process of achieving the embodiments of the present application, or is technical information acquired in the process of achieving the embodiments. Therefore, it may contain information that does not form the prior art that is already known to the public.

United States Patent Application Publication Number US 2014/0238620 A1 describes a rotary evaporator having a clamping insert with a sleeve-like base shape.

United States Patent Application Publication Number US 2010/0193140 A1 describes a rotary evaporator having an apparatus for securing of a ground joint including a ground sleeve and a ground core.

### SUMMARY OF THE INVENTION

Additional aspects will be set forth in part in the description which follows and, in part, will be apparent from the description, or may be learned by practice of the presented embodiments of the disclosure.

According to an aspect of the disclosure, there is provided an automatic evaporator system according to claim 1.

Embodiments may thus provide an automatic system for moving an evaporation flask by using a robot and a robot arm in a rotary evaporator.

Embodiments may comprise an automatic connection/locking and release/unlocking of the evaporation flask to and from a condenser by using the robot and the robot arm in the rotary evaporator.

Embodiments may provide a kinematic structure in which vibration does not occur when unlocking the evaporation flask in the rotary evaporator, that is, a structure using a pivot closest to the locked flask to push the flask and release the locking.

Proposed embodiments may provide the automatic movement of a heating bath that relays heat to the evaporation flask by using the robot or a stage device in the rotary evaporator;
In the rotary evaporator, the rotating of the evaporation flask may be at a certain tilting angle and a certain speed such that a bumping phenomenon is prevented while a sample is evaporated.

In the rotary evaporator, the robot and device may be configured for rotating the evaporation flask tilted at a certain angle and speed while the sample is evaporated.

In the rotary evaporator, the robot and device may be configured for automatically supplying a fixed amount of a solvent required for the evaporation of the sample according to the type of sample.

Further, in the rotary evaporator, there may be provided a robot and device for separating condensate and waste when condensation after evaporation is completed, extracting them, automatically draining through a designated path, and collecting them in a designated place.

The at least one gripper may include a gripping member configured to rotate about the rotation axis and grip a circumferential surface of the flask when rotating in the first rotation direction, and a pushing member configured to rotate about the rotation axis and push the flask from the flask connector when rotating in the second rotation direction, and wherein the gripping member and the pushing member integrally rotate about the rotation axis.

While the at least one gripper rotates about the rotation axis, an end of the gripping member may move such that a distance of the end of the gripping member from a central axis of the flask connector changes and an end of the pushing member may move such that a distance of the end of the pushing member to the central axis changes.

The at least one gripper may include a plurality of grippers, and the plurality of grippers may be arranged to form an equal angle with respect to a central axis of the flask connector.

The flask fastening device may include a moving member that is configured to move in a direction parallel to a central axis of the flask connector, and rotate the at least one gripper about the rotation axis.

The moving member may be further configured to apply an external force to the at least one gripper and rotate the at least one gripper in the second rotation direction while moving in a first translation moving direction toward the flask.

The moving member may be further configured to apply an external force to the at least one gripper and rotate the at least one gripper in the first rotation direction while moving in a second translation moving direction opposite to the first translation moving direction.

The flask fastening device may include at least one elastic member respectively connected to each of the at least one gripper, and the at least one elastic member may be configured to apply an elastic force to the at least one gripper such that the at least one gripper rotates in the first rotation direction.

The flask fastening device may include a rotating member configured to connect the sample inlet to the flask connector and rotate the flask connector with respect to the sample inlet about a central axis of the flask connector.

The automatic evaporator system may include a flask support device configured to move the flask, support an outer surface of the flask, and adjust a position of the flask based on an operation of the flask fastening device while the flask fastening device moves the flask between the first position and the second position.

The flask support device may be further configured to pivot based on a rotating operation of the flask while supporting the flask.

The automatic evaporator system may include a support station including a first support on a ground, a column support configured to support the condenser, and a connector connecting the first support to the column support and configured to rotate the column support with respect to the first support about a first axis parallel to the ground.

The support station may include a height adjuster configured to adjust a position of the column support along a height direction of the first support.

The automatic evaporator system may include a stage configured to adjust a position of the bath, where the stage may include a bath support configured to support the bath, a first moving member connected to the bath support and movable on a flat surface parallel to a ground, and a second moving member connected to the bath support and movable in a height direction perpendicular to the ground.

According to an aspect of the disclosure, a flask fastening device may include a flask connector connected to a condenser and including a connector hole communicating with a sample inlet of the condenser, and at least one gripper connected to the flask connector, the at least one gripper configured to rotate about a rotation axis in a first rotation direction and a second rotation direction opposite to the first rotation direction, grip a flask to be held to the flask connector when rotating in the first rotation direction about the rotation axis, and separate the flask that is contacting the flask connector from the flask connector when rotating in the second rotation direction about the rotation axis.

The at least one gripper may include a gripping member configured to rotate about the rotation axis and move the flask in a direction, where an end of the gripping member may be configured to contact a circumferential surface of a bottleneck of the flask when the gripping member rotates in the first rotation direction, and a pushing member configured to integrally rotate with the gripping member about the rotation axis and push the flask from the flask connector by contacting an end of the bottleneck of the flask when rotating in the second rotation direction.

The flask fastening device may include a moving member connected to the flask connector, where the moving member may be configured to move in a first translation moving direction toward the pushing member and a second translation moving direction opposite to the first translation moving direction, and apply pressure to the pushing member and move the at least one gripper in the second rotation direction when moving in the first translation moving direction.

The flask fastening device may include an elastic member configured to connect the flask connector to the gripping member and apply an elastic force to the gripping member such that the at least one gripper rotates in the first rotation direction.

The flask fastening device may include a rotating member configured to connect the flask connector to the condenser and rotate the flask connector with respect to the condenser.

According to an aspect of the disclosure, an automatic evaporator system may include a flask including a flask inlet, a condenser including a sample inlet, and a flask fastening device including a flask connector including a connector hole in communication with the condenser via the sample inlet and at least one gripper connected to the flask connector, where the at least one gripper may be configured to rotate about a rotation axis in a first rotation direction, thereby moving the flask from a first position at which the flask inlet is separated from the connector hole to a second position at which the flask inlet contacts the connector hole and is in communication with the sample inlet, and rotate about the rotation axis in a second rotation direction, thereby moving the flask from the second position to the first position.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 is a diagram illustrating an automatic evaporator system according to an embodiment;
FIG. 2 is a perspective view illustrating an automatic evaporator system according to one or more embodiments;
FIG. 3A is a partial perspective view illustrating an automatic evaporator system according to one or more embodiments;
FIG. 3B is a partial side view illustrating an automatic evaporator system according to one or more embodiments;
FIG. 3C is a partial enlarged view illustrating an automatic evaporator system according to one or more embodiments;
FIG. 4A is a diagram illustrating a state in which a flask fastening device moves a flask to a first position with a gripper according to one or more embodiments;
FIG. 4B is a diagram illustrating a state in which the flask fastening device moves a flask to a second position with a gripper according to one or more embodiments; and
FIGS. 5A to 5D are diagrams each illustrating an operating process of the automatic evaporator system according to one or more embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, example embodiments will be described in detail with reference to the accompanying drawings. The embodiments described below are merely exemplary, and various modifications are possible from these embodiments. In the following drawings, the same reference numerals refer to the same components, and the size of each component in the drawings may be exaggerated for clarity and convenience of description.

In the following description, when a component is referred to as being "above" or "on" another component, it may be directly on an upper, lower, left, or right side of the other component while making contact with the other component or may be above an upper, lower, left, or right side of the other component without making contact with the other component.

Terms such as first, second, etc. may be used to describe various components, but are used only for the purpose of distinguishing one component from another component. These terms do not limit the difference in the material or structure of the components.

The terms of a singular form may include plural forms unless otherwise specified. In addition, when a certain part "includes" a certain component, it means that other components may be further included rather than excluding other components unless otherwise stated.

In addition, terms such as "unit" and "module" described in the specification may indicate a unit that processes at least one function or operation, and this may be implemented as hardware or software, or may be implemented as a combination of hardware and software.

The use of the term "the" and similar designating terms may correspond to both the singular and the plural.

Operations of a method may be performed in an appropriate order unless explicitly described in terms of order. In addition, the use of all illustrative terms (e.g., etc.) is merely for describing technical ideas in detail, and the scope is not limited by these examples or illustrative terms unless limited by the claims.

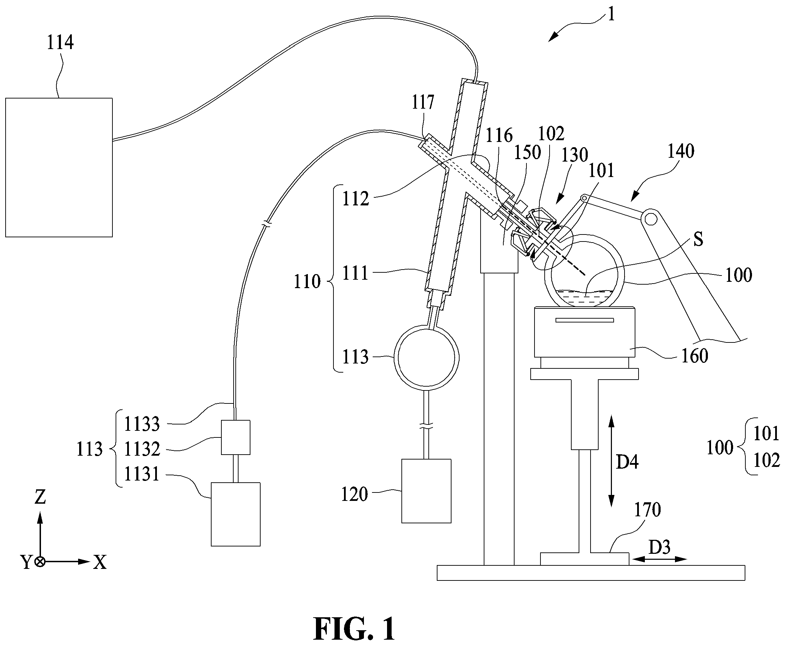

FIG. 1 is a diagram illustrating an automatic evaporator system according to example embodiment.

Referring to FIG. 1, an automatic evaporator system 1 according to one or more embodiments may distill a sample S and separate a plurality of substances mixed in the sample S. The automatic evaporator system 1 according to one or more embodiments may separate a target substance evaporated from the sample S by using a difference of a boiling temperature (BT) of each substance mixed in the sample S. The automatic evaporator system 1 according to one or more embodiments may automatically perform a series of operations to separate the target substance from the sample S. The automatic evaporator system 1 according to one or more embodiments may include a flask 100, a condenser 110, an extractor 120, a sample supplier 113, a flask fastening device 130, a flask support device 140, a support station 150, a bath 160, and a stage 170.

In one or more embodiments, the flask 100 may accommodate the sample S. In one or more embodiments, the flask 100 may be formed to include a bottleneck 101 of which an inlet 102 is formed at an end. In one or more embodiments, the flask 100 may be formed of various materials, such as glass, plastic (e.g., a polyethylene material), metal, or Teflon. The material of the flask 100 may be determined depending on the type of the sample S accommodated by the flask 100. In one or more embodiments, a connector to be fastened to the flask fastening device 130 to be described later may be included in the bottleneck 101 of the flask 100, but examples are not limited thereto.

In one or more embodiments, the condenser 110 may be connected to the flask 100, may receive the target substance evaporated from the sample S accommodated by the flask 100, and may condense the received target substance. In one or more embodiments, the condenser 110 may include a body 111 where condensation is performed on the target substance, a sample inlet 112 that is connected to the flask 100, and an extraction portion 113 that is connected to the extractor 120.

In one or more embodiments, the body 111 may be formed in a column having a longitudinal direction. In one or more embodiments, the body 111 may include cooling mechanism for cooling and condensing the target substance that flows inside. For example, the body 111 may include a cooling coil that continuously circulates a coolant. For another example, the body 111 may be connected to a cooling device and may condense the target substance that flows inside in an evaporated state. Other cooling mechanisms may be implemented to the body 111 as will be understood by one of ordinary skill in the art from the disclosure herein.

In one or more embodiments, the sample inlet 112 may extend in a direction from the body 111. An inlet 116 may be formed at an end of the sample inlet 112 to communicate with an inlet 102 of the flask 100. In one or more embodiments, while the condenser 110 is connected to the flask 100, the sample S may be supplied through the inlet 116 to the flask 100 or the target substance evaporated from the flask 100 may flow inside the condenser 110.

In one or more embodiments, the extraction portion 113 may be connected to the body 111. For example, the extraction portion 113 may be connected to a lower portion of the body 111. In one or more embodiments, the target substance that is condensed in and dropped from the body 111 may be positioned in the extraction portion 113.

In one or more embodiments, a vacuum decompressor 114 may be connected to the condenser 110. The vacuum decompressor 114 may be connected to the condenser 110, may vacuum-decompress the inside of the condenser 110, and may induce the target substance evaporated from the flask 100 to flow inside the condenser 110. In one or more embodiments, the vacuum decompressor 114 may include, for example, a vacuum pump, and may control pressure inside the condenser 110 through the vacuum pump.

In one or more embodiments, the extractor 120 may be connected to the condenser 110 and may extract the target substance condensed in the condenser 110. In one or more embodiments, the extractor 120 may be connected to the extraction portion 131 of the condenser 110 and may extract the target substance caught in the extraction portion 121 in a liquid state. In one or more embodiments, a valve may be connected between the condenser 110 and the extractor 120 to control the movement of the extracted target substance.

In one or more embodiments, the sample supplier 113 may supply the sample S to the inside of the flask 100. In one or more embodiments, the sample supplier 113 may be connected to the condenser 110 through opening 117 and may supply the sample S to the inside of the flask 100 through the sample inlet 112 of the condenser 110. For example, the sample supplier 113 may supply the sample S to the inside of the flask 100 through the inlet 116 of the condenser 110 while the inlet 102 of the flask 100 is connected to the condenser 110, and may prevent the sample S from leaking outside the flask 100 and the condenser 110. In one or more embodiments, the sample supplier 113 may include a sample container 1131 where the sample S is stored, a pipe 1133 extending to the inlet 116 of the condenser 110 from the sample container 1131, and a sample supply valve 1132 that is mounted to the pipe 1133 and is configured to control a supply flow of the sample S.

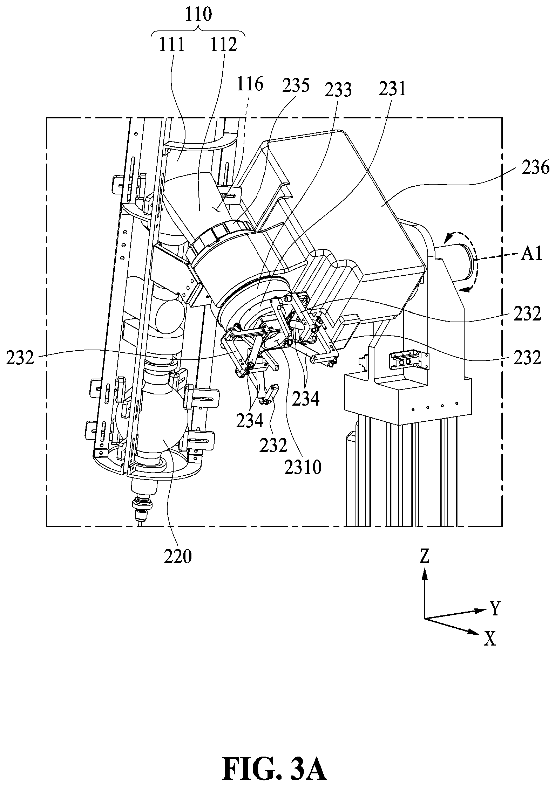

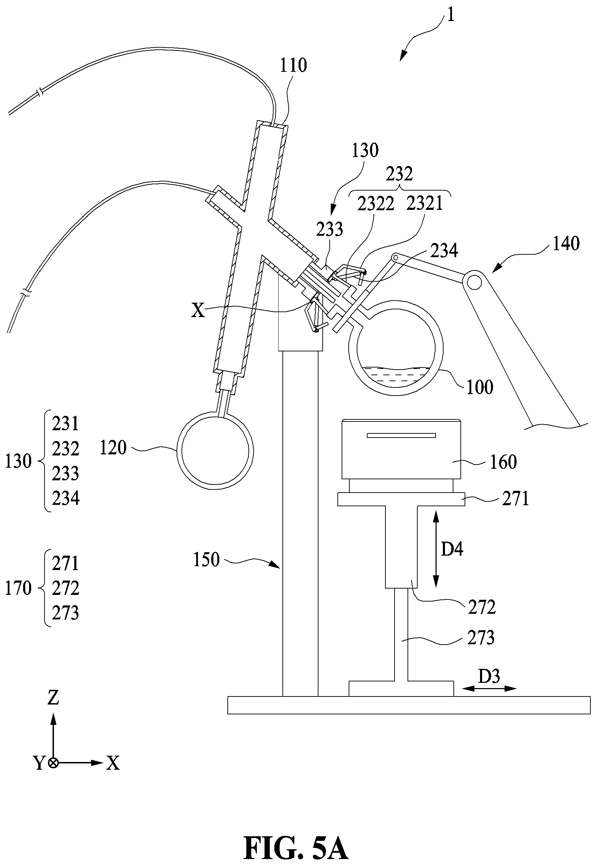

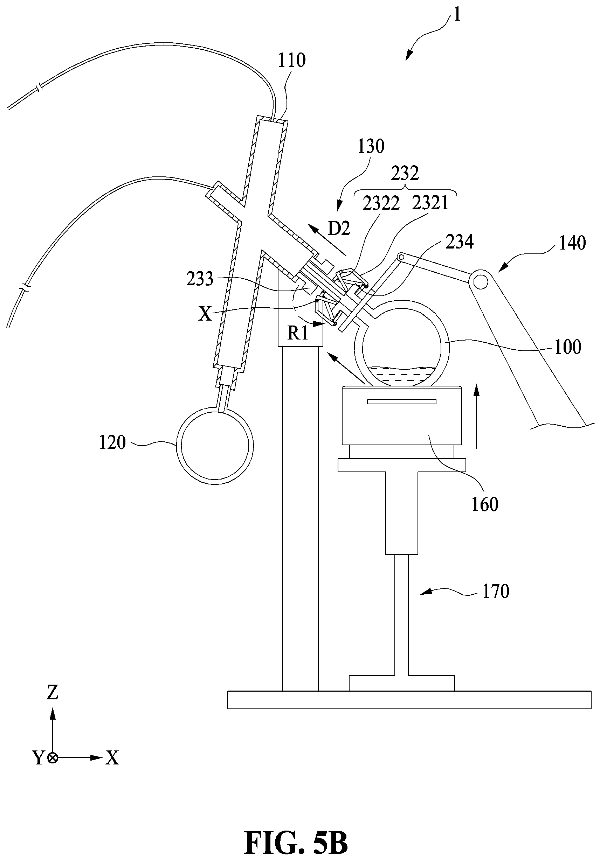

In one or more embodiments, the flask fastening device 130 may automatically fasten and separate the flask 100 to and from the condenser 110. In one or more embodiments, the flask fastening device 130 may be mounted to the sample inlet 112 of the condenser 110. In one or more embodiments, the flask fastening device 130 may grip the flask 100 and move the flask 100 to a second position (e.g., a second position of the flask 100 of FIG. 5B) where the flask 100 is connected to the condenser 110 from a first position (e.g., a first position of the flask 100 relative to the condenser 110 of FIG. 5A) where the flask 100 is separated from the condenser 110. In the second position, the flask 100 may be connected to the condenser 110 via the flask connector (e.g., flask connector 231 of FIG. 3A). In the first position, the flask 100 may not contact the flask connector 231, and in the second position, the flask 100 may contact the flask connector 231. The gripper (e.g., gripper 232 of FIG. 3A) may hold the flask 100 in the second position, such that the flask 100 may be fastened to the flask connector 231 and connected to the condenser 110. In the second position, the flask 100 may contact the condenser 110, may be connected to the condenser 110, may be fastened to the condenser 110, etc. In one or more embodiments, the flask fastening device 130 may move the flask 100 fastened to the condenser 110 from the second position to the first position to separate the flask 100 from the condenser 110 when the separation of the target substance is completed. In one or more embodiments, the flask fastening device 130 may rotate the flask 100 about a central axis C while gripping the flask 100. The detailed description of the flask fastening device 130 is provided later.

In one or more embodiments, the flask support device 140 may support the outer surface of the flask 100 (for example, the bottleneck 101 of the flask 100). In one or more embodiments, the flask support device 140 may move the flask 100 while supporting the flask 100. For example, the flask support device 140 may move the flask 100 to a position where the flask 100 may be gripped by the flask fastening device 130 (for example, to the first position). In one or more embodiments, the flask support device 140 may operate to have multi-degrees-of-freedom movement (e.g., 6-degrees-of-freedom movement including X, Y, Z, YAW, PITCH, and ROLL) such that an alignment angle and a relative position of the flask 100 to the flask fastening device 130 are aligned. In one or more embodiments, the flask support device 140 may move the position of the flask 100 depending on an operation of the flask 100 according to an operation of the flask fastening device 130 while supporting the flask 100 in a process in which the flask 100 is fastened to and separated from the condenser 110 by the flask fastening device 130. In one or more embodiments, the flask support device 140 may pivot according to a rotating operation of the flask 100 while supporting the flask 100.

In one or more embodiments, the support station 150 may support the condenser 110. The support station 150 may adjust a support position (e.g., a height of the condenser 110 with respect to the ground) of the condenser 110 with respect to the ground or a gradient (e.g., a tilting angle of the condenser 110 with respect to the ground) of the condenser 110 with respect to the ground.

In one or more embodiments, the bath 160 may relay heat to the flask 100. In one or more embodiments, the bath 160 may accommodate the flask 100. The bath 160 may heat the accommodated flask 100 at a set temperature. In one or more embodiments, the set temperature at which the bath 160 heats the flask 100 may be controlled to be determined depending on a BT of the target substance to be separated from the sample S.

In one or more embodiments, the stage 170 may support the bath 160. In one or more embodiments, the stage 170 may adjust a position of the bath 160. For example, the stage 170 may adjust a relative position of the bath 160 to the flask 100 fastened to the condenser 110 by the stage 170 adjusting the position of the bath 160 on a flat surface parallel to the ground and the height of the bath 160 with respect to the ground. For example, the stage 170 may move the bath 160 outside the flask 100 so as not to interfere with an operation of the flask fastening device 130 while the flask 100 is fastening to or separating from the condenser 110 and may move the bath 160 to a position accommodating the flask 100 in a process of heating the flask 100 fastened to the condenser 110.

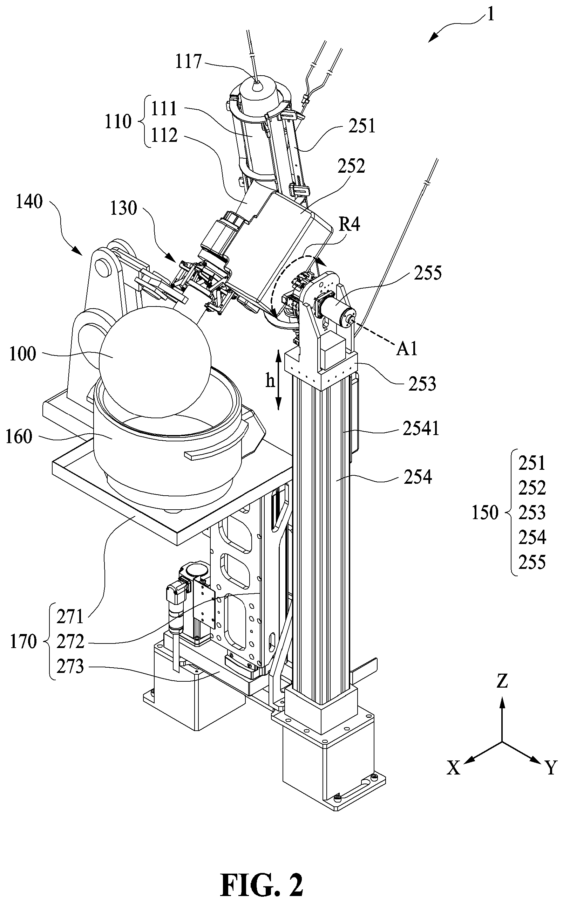

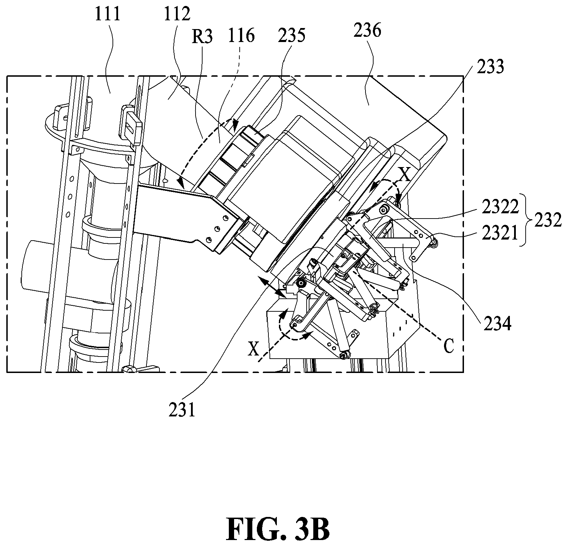

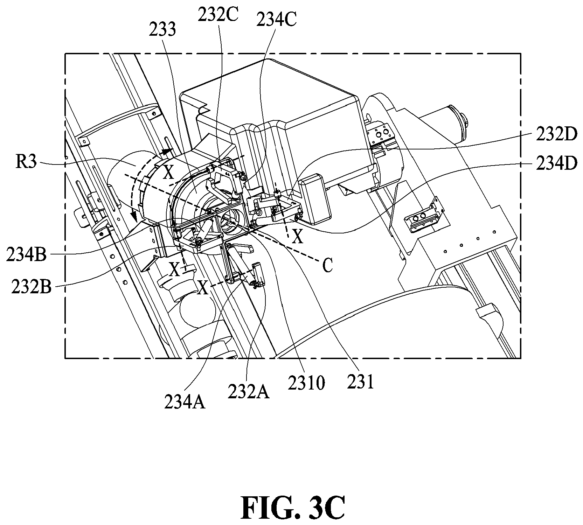

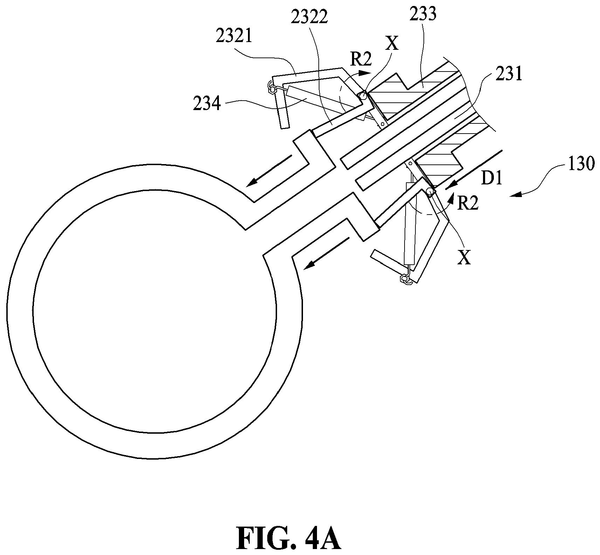

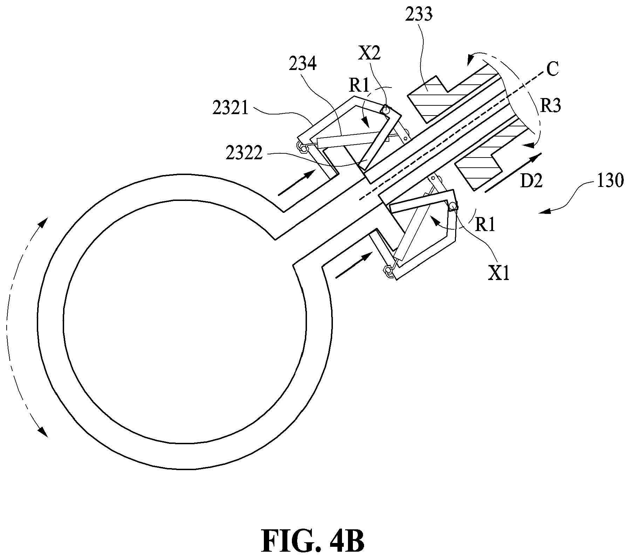

FIG. 2 is a perspective view illustrating an automatic evaporator system according to one or more embodiments. FIG. 3A is a partial perspective view illustrating an automatic evaporator system according to one or more embodiments. FIG. 3B is a partial side view illustrating automatic evaporator system according to one or more embodiments. FIG. 3C is a partial enlarged view illustrating automatic evaporator system according to one or more embodiments. FIG. 4A is a diagram illustrating a state in which a flask fastening device moves a flask to a first position through a gripper according to one or more embodiments. FIG. 4B is a diagram illustrating a state in which the flask fastening device moves the flask to a second position through the gripper according to one or more embodiments.

Referring to FIGS. 2, 3A, 3B, 3C, 4A, and 4B, the automatic evaporator system 1 according to one or more embodiments may include the flask 100, the flask support device 140, the condenser 110, the extractor 120, the sample supplier 113, the support station 150, the bath 160, the stage 170, and the flask fastening device 130.

In one or more embodiments, the flask 100 may accommodate the sample S inside and may evaporate the target substance from the sample S by being heated by the bath 160. In one or more embodiments, a connector for being fastened to the flask fastening device 130 may be mounted to a bottleneck 101 end of the flask 100, but the connector may be omitted. In one or more embodiments, the condenser 110 may be connected to the flask 100, may receive the target substance evaporated from the flask 100 and may condense the received target substance. In one or more embodiments, the condenser 110 may include cooling mechanism for condensation and may be connected to a vacuum decompressor 114 for forming vacuum pressure inside the condenser 110. In one or more embodiments, the condenser 110 may include the sample inlet 112 in which an inlet 116 is formed to communicate with an inlet 102 of the flask 100. In one or more embodiments, the extractor 120 may be connected to the condenser 110 and may extract the target substance condensed in the condenser 110. In one or more embodiments, the sample supplier 113 may supply the sample S to the inside of the flask 100 connected to the condenser 110. The sample supplier 113 may supply the sample S to the inside of the flask 100 connected to the condenser 110 through the inlet 116 of the condenser 110.

In one or more embodiments, the flask 100 may be supported by the flask support device 140. The flask support device 140 may move a position of the flask 100 while gripping the outer surface of the flask 100. In one or more embodiments, the flask support device 140 may be provided as an articulated robot having multi-degrees-of-freedom movement. In one or more embodiments, the flask support device 140 may grip the flask 100 and align the condenser 110 to be a position in which the flask 100 may be fastened to (i.e., connected to, contacting, etc.) the condenser 110. For example, the flask support device 140 may be positioned in an aligned state in a first position. In one or more embodiments, the first position may be a position in which the outer surface of the flask 100 may be gripped by the flask fastening device 130, and the flask 100 may be separated from the condenser 110 in the first position (e.g., the position of the flask 100 relative to the condenser 110 of FIG. 5A). A second position may be a position to which the flask 100 is pulled and moved by the flask fastening device 130, and the flask 100 may be fastened to the condenser 110 in the second position (e.g., the position of the flask 100 relative to the condenser 110 of FIG. 5B). The flask fastening device 130 may move the flask 100 between the first position and the second position relative to the condenser 110. In the second position, the flask 100 may be connected to the condenser 110 via the flask connector 231. In the first position, the flask 100 may not contact the flask connector 231, and in the second position, the flask 100 may contact the flask connector 231. The gripper 232 may hold the flask 100 in the second position, such that the flask 100 may be fastened to the flask connector 231 and connected to the condenser 110. In the second position, the flask 100 may contact the condenser 110, may be connected to the condenser 110, may be fastened to the condenser 110, etc.

In one or more embodiments, the flask support device 140 may adjust the position of the flask 100 according to an operation of the flask fastening device 130 while supporting the flask 100 as the flask 100 moves from the first position to the second position in a process of the flask 100 being fastened to the condenser 110. In the second position, the flask 100 may be connected to the condenser 110 via the flask connector 231. In the first position, the flask 100 may not contact the flask connector 231, and in the second position, the flask 100 may contact the flask connector 231. The gripper 232 may hold the flask 100 in the second position, such that the flask 100 may be fastened to the flask connector 231 and connected to the condenser 110. In the second position, the flask 100 may contact the condenser 110, may be connected to the condenser 110, may be fastened to the condenser 110, etc. In one or more embodiments, the flask support device 140 may move the flask 100 according to a moving operation of the flask fastening device 130 while supporting the flask 100 in a process of the flask 100 being separated from the condenser 110 and moving from the second position to the first position.

In one or more embodiments, the flask support device 140 may operate to selectively release a gripping state for the flask 100 so as not to interfere with a heating operation of the flask 100 while the flask 100 is fastened to the condenser 110 through the flask fastening device 130.

In one or more embodiments, the condenser 110 may be supported by the support station 150. In one or more embodiments, the support station 150 may include a support 254 that is on the ground, a height adjuster 253 that is movably connected to the support 254, a connector 252 that is rotatably connected to the support 254, an actuator 255 for rotating the connector 252, and a column support 251 for supporting the condenser 110.

In one or more embodiments, the support 254 may be on the ground and may extend in a height direction h. In one or more embodiments, the height adjuster 253 may be movably connected to the support 254 in a height direction h. For example, a guide rail 2541 may be formed on the support 254 along the height direction h perpendicular to the ground, and the height adjuster 253 may be movably connected to the support 254 along the guide rail 2541. In one or more embodiments, the connector 252 may be connected to the height adjuster 253 and may rotate about a first axis A1 parallel to the ground with respect to the support 254. In one or more embodiments, the column support 251 may be connected to the connector 252. In one or more embodiments, the column support 251 may be formed in a rack structure, and the condenser 110 may be fixed to the column support 251. In one or more embodiments, the height (e.g., height in z-axis direction)of the column support 251 from the ground may change depending on a moving operation of the height adjuster 253 in a height direction h with respect to the support 254. For example, the height of the condenser 110 supported by the column support 251 may change depending on the movement of the height adjuster 253 in the height direction h with respect to the support 254. In one or more embodiments, the column support 251 may rotate about the first axis A1 according to a moving operation of a rotator with respect to the support 254. For example, a tilting state of the condenser 110 supported by the column support 251 with respect to the ground may change according to a rotating operation of the actuator 255 about the first axis A1 with respect to the support 254. In this case, while the flask 100 is fastened to the condenser 110, since the position of the flask 100 changes depending on a position change of the condenser 110, the height and gradient of the flask 100 may be readily adjusted. For example, when the flask 100 is heated, a tilting angle of the flask 100 may be adjusted through an operation of the support station 150 such that a bumping phenomenon in which only some of the sample S in the flask 100 is evaporated may not occur.

In one or more embodiments, the bath 160 may heat the flask 100 connected to the condenser 110 at a set temperature. For example, a heating liquid that is maintained at the set temperature may be accommodated inside the bath 160, and the bath 160 may accommodate at least some of the flask 100 such that the flask 100 may be immersed in the heating liquid. For example, the bath 160 may heat the flask 100 in a double boiling method. However, the method of heating the flask 100 through the bath 160 is not limited to the foregoing example.

In one or more embodiments, the stage 170 may support the bath 160. In one or more embodiments, the stage 170 may adjust a position of the bath 160. In one or more embodiments, the stage 170 may include a bath support 271 for supporting the bath 160, a first moving member 272 that is connected to the bath support 271 and is movable in the height direction h perpendicular to the ground (e.g., perpendicualr plane of XY), and a second moving member 273 that is connected to the bath support 271 and is movable on a flat surface parallel to the ground. In one or more embodiments, the second moving member 273 may be movably connected along a first guide rail that is parallel to the ground. In one or more embodiments, the first moving member 272 may be connected to the second moving member 273 and may be movably connected along a second guide rail that is along a height direction h of the second moving member 273. In one or more embodiments, the bath support 271 may be in an upper portion of the first moving member 272. For another example, the first moving member 272 may move along a height direction D4 (FIG. 5A) perpendicular to the ground, and the second moving member 273 may be movably connected to the first moving member 272 in a direction D3 (FIG. 5A) parallel to the ground. In this case, the bath support 271 may be in the upper portion of the first moving member 272. In one or more embodiments, the stage 170 may adjust the position of the bath 160 to a position suitable for heating the flask 100. In one or more embodiments, the stage 170 may move the bath 160 to the outside of the flask 100 such that the bath 160 does not interfere with a fastening and separating operation of the flask 100 to and from the condenser 110 or a moving operation of the flask 100 in operations before and after an operation of heating the flask 100.

In one or more embodiments, the flask fastening device 130 may automatically fasten or separate the flask 100 to and from the condenser 110. In one or more embodiments, the flask fastening device 130 may be mounted to the sample inlet 112 of the condenser 110.

Referring to FIGS. 3A, 3B, 3C, 4A, and 4B, the flask fastening device 130 according to one or more embodiments may include a flask connector 231, one or more grippers 232, a moving member 233, an elastic member 234, a rotating member 235, and a rotation actuator 236.

In one or more embodiments, the flask connector 231 may be mounted to the sample inlet 112 of the condenser 110. For example, the flask connector 231 may be mounted to an end of the sample inlet 112 in which an inlet 116 is formed. In one or more embodiments, the flask connector 231 may include a connector hole 2310 that communicates with the inlet 116. In one or more embodiments, the flask 100 may be fastened to the flask connector 231. For example, the flask connector 231 may be connected to a connector mounted to the flask 100. In one or more embodiments, while the flask 100 is fastened to the flask connector 231, the flask connector 231 may connect an inlet 116 of the condenser 110 with an inlet 102 of the flask 100 such that the inlet 116 of the condenser 110 and the inlet 102 of the flask 100 may communicate.

In one or more embodiments, a gripper 232 may be connected to the flask connector 231. In one or more embodiments, a plurality of grippers 232 are provided. The plurality of grippers 232 may be arranged to form an equal angle based on a central axis C of the flask connector 231 and may contact different points of the outer surface of the flask 100 with a uniform force. For example, as illustrated in FIG. 3C, the flask fastening device 130 may include four grippers 232A, 232B, 232C, and 232D. The four grippers 232A, 232B, 232C, and 232D may be arranged to form an equal angle of 90 degrees based on the central axis C of the flask connector 231 (for example, based on the center of the connector hole 2310).

In one or more embodiments, the plurality of grippers 232 may be rotatably connected to rotate about rotation axis X. In the invention, a rotation axis X of each of the plurality of grippers 232 is on the same flat surface perpendicular to the central axis C of the flask connector 231. In one or more embodiments, the plurality of grippers 232 may each have one-degree-of-freedom movement rotatable about each respective rotation axis X. In one or more embodiments, the plurality of grippers 232 may rotate about each rotation axis X in a first rotation direction R1 and in a second rotation direction R2 opposite to the first rotation direction R1.

In one or more embodiments, when rotating in the first rotation direction R1, the gripper 232 may move the flask 100 from the first position (e.g., a position of the flask 100 relative to the flask connector 231 illustrated in FIG. 4A) to the second position (e.g., a position of the flask 100 relative to the flask connector 231 illustrated in FIG. 4B) by gripping the flask 100 and pulling the flask 100 to the flask connector 231. As the gripper 232 rotates in the first rotation direction R1, the flask 100 may be fastened to the flask connector 231 in the second position, and the gripper 232 may hold the flask 100 in the second position. In one or more embodiments, when rotating in the second rotation direction R2, the gripper 232 may move the flask 100 from the second position to the first position by pushing an end of the flask 100 away from the flask connector 231, such that the flask 100 does not contact the flask connector 231. As the gripper 232 rotates in the second rotation direction R2, the flask 100 may be separated from the flask connector 231, releasing the fastened/connected state while moving from the second position to the first position. For example, the gripper 232 may perform both fastening and separating operations of the flask 100 to and from the flask connector 231 through only a one-degree-of-freedom rotation operation about the rotation axis X.

In one or more embodiments, the gripper 232 may include a gripping member 2321 and a pushing member 2322. In one or more embodiments, the gripping member 2321 and the pushing member 2322 may integrally rotate about the rotation axis X. The gripping member 2321 and the pushing member 2322 may be connected to maintain a constant shape regardless of a rotating operation of the gripper 232. For example, the gripping member 2321 and the pushing member 2322 may rotate about the rotation axis X in the same direction and may constantly maintain the shape of the gripper 232.

In one or more embodiments, when rotating in the first rotation direction R1, the gripping member 2321 may grip the circumferential surface 104 of the flask 100 and pull the flask 100 in the direction of the flask connector 231. In one or more embodiments, the gripping member 2321 may have a shape that bends to wrap around the outside of the bottleneck 101 of the flask 100. For example, the gripping member 2321 may have a shape that widens outward to the flask 100 from the rotation axis X with the end bending inward. In one or more embodiments, the gripping member 2321 may move such that a gap formed by the end 23211 with the central axis C of the flask connector 231 changes while rotating about the rotation axis X. For example, when rotating in the first rotation direction R1, the gripping member 2321 may support the circumferential surface 104 of the bottleneck 101 of the flask 100 with the end 23211 closer to the central axis C of the flask connector 231. When rotating in the second rotation direction R2, the gripping member 2321 may release a gripping state for the flask 100 with the end 23211 further away from the central axis C of the flask connector 231.

In one or more embodiments, when rotating in the second rotation direction R2, the pushing member 2322 may contact the end (e.g., the circumferential surface 104) of the flask 100 toward the flask connector 231 and may push the flask 100 from the flask connector 231. In one or more embodiments, the pushing member 2322 may have a shape that bends in a direction opposite to the gripping member 2321 based on the rotation axis. For example, the pushing member 2322 may have a shape that is closer to the central axis C of the flask connector 231 from the rotation axis X and bends in a direction toward the flask 100 (e.g., FIG. 4A). In one or more embodiments, the pushing member 2322 may move such that a position of the end 23222 toward the central axis C of the flask connector 231 changes while rotating about the rotation axis X. For example, when rotating in the first rotation direction R1, the pushing member 2322 may push the flask 100 in a direction away from the flask connector 231 with the end 23222 moving toward the flask 100. When rotating in the second rotation direction R2, the pushing member 2322 may not interfere with the fastening of the flask 100 to the flask connector 231 with the end 23222 moving toward a direction opposite to the flask 100.

For example, the gripper 232 according to one or more embodiments may release a gripping state of the gripping member 2321 for the flask 100 while pushing the flask 100 through the pushing member 2322 when rotating in the first rotation direction R1 about the rotation axis X. The gripper 232 may grip the circumferential surface 104 of the flask 100 through the gripping member 2321 and pull the flask 100 to be fastened to the flask connector 231 while moving the pushing member 2322 to not contact the flask 100 when rotating in the second rotation direction R2.

In one or more embodiments, the moving member 233 may be movably connected to the flask connector 231 and may rotate the gripper 232 about the rotation axis X through a moving operation. In one or more embodiments, the moving member 233 may be connected to wrap about the circumferential surface (e.g., the outer surface of the connector hole 2310) of the flask connector 231. In one or more embodiments, the moving member 233 may translationally move in a direction parallel to the central axis C of the flask connector 231. For example, the moving member 233 may move in a first moving direction D1 toward the gripper 232 (or the flask 100) and a second moving direction D2 opposite to the first moving direction D1.

In one or more embodiments, the moving member 233 may apply an external force to the gripper 232 to rotate through the translational movement with respect to the flask connector 231. In one or more embodiments, when moving in the first moving direction D1, the moving member 233 may contact the pushing member 2322 of the gripper 232 or may be connected to apply power to the pushing member 2322. In one or more embodiments, when moving in the first moving direction D1, the moving member 233 may apply torque such that the pushing member 2322 rotates about the rotation axis X in the second rotation direction R2. In this case, the gripper 232 may rotate in the second rotation direction R2 by the torque applied to the pushing member 2322 by the moving member 233. In one or more embodiments, while contacting the gripper 232, the moving member 233 may limit the rotation of the gripper 232 in the first rotation direction R1. In one or more embodiments, the moving member 233 may be spaced apart from the gripper 232 (for example, from the pushing member 2322) while moving in the second moving direction D2. In this case, the rotation of the gripper 232 in the second rotation direction R2 may be allowed.

In one or more embodiments, when the moving member 233 is directly connected to the pushing member 2322, the movement of the moving member 233 in a first direction D1 may cause a rotational torque that is applied to the pushing member 2322 in the first rotation direction R1 and the movement of the moving member 233 in a second direction D2 may cause a rotational torque that is applied to the pushing member 2322 in the second rotation direction R2.

In one or more embodiments, the elastic member 234 may be connected to the gripper 232 and may apply an elastic force to the gripper 232 such that the gripper 232 rotates in the first rotation direction R1. In one or more embodiments, one side of the elastic member 234 may be connected to the flask connector 231 and the other side of the elastic member 234 may be connected to the gripping member 2321 of the gripper 232. In one or more embodiments, the elastic member 234 may store an elastic force according to an increase of a gap between the flask connector 231 and the gripping member 2321 when the gripper 232 is rotated by the moving member 233 in the second rotation direction R2. In one or more embodiments, the elastic member 234 may rotate the gripper 232 in the first rotation direction R1 by pulling the gripping member 2321 in the direction of the flask connector 231 with a restoring force when the restriction on the moving member 233 rotating the gripper 232 in the first rotation direction R1 is lifted (for example, when contact between the moving member 233 and the gripper 232 is released). For example, each gripper 232 may receive an external force from the moving member 233 and the elastic member 234 and may rotate about the rotation axis X in both directions R1 and R2. In one or more embodiments, the elastic member 234 may be connected to each of the plurality of grippers 232. For example, as illustrated in FIG. 3C, a plurality of elastic members 234A, 234B, 234C, and 234D respectively corresponding to the plurality of grippers 232A, 232B, 232C, and 232D may be provided.

In one or more embodiments, the rotating member 235 may rotate the flask connector 231, and the flask 100 fastened to the flask connector 231 may rotate with respect to the sample inlet 112 of the condenser 110. In one or more embodiments, the rotating member 235 may connect the sample inlet 112 of the condenser 110 to the flask connector 231. For example, the rotating member 235 may be rotatably connected to the sample inlet 112 based on the central axis C of the flask connector 231. In one or more embodiments, the rotating member 235 may be rotatably mounted to the circumferential surface of the sample inlet 112, and the flask connector 231 may be connected to the rotating member 235 and rotate with the rotating member 235. In one or more embodiments, the rotating member 235 may be connected to a rotation actuator 236 and may receive power from the rotation actuator 236 and rotate. In one or more embodiments, the rotating member 235 may rotate about the central axis C of the flask connector 231 in a third rotation direction R3 and may rotate the flask connector 231. When the flask connector 231 rotates in the third rotation direction R3, the gripper 232 connected to the flask connector 231 and the flask 100 fastened to the flask connector 231 may also rotate in the third rotation direction R3. In this structure, since the flask 100 may continuously rotate in the third rotation direction R3 while the flask 100 is accommodated and is heated by the bath 160, a bumping phenomenon caused when only a certain portion of the sample S accommodated in the flask 100 is heated may be reduced or prevented. In one or more embodiments, when the flask 100 rotates according to a rotating operation of the flask connector 231 through the rotating member 235, the flask support device 140 for gripping the flask 100 may pivot according to a rotating operation of the flask 100.

FIGS. 5A to 5D are diagrams each illustrating an operating process of the automatic evaporator system 1 according to one or more embodiments. Hereinafter, referring to FIGS. 5A to 5D, a series of operations for extracting a target substance from the sample S through the automatic evaporator system 1 is described.

As illustrated in FIG. 5A, the automatic evaporator system 1 according to one or more embodiments may support the flask 100 with the flask support device 140. The flask support device 140 may move the flask 100 while supporting the flask 100 to a first position where the flask 100 is separated from the condenser 110. In one or more embodiments, the flask support device 140 may align the position and angle of the flask 100 relative to the condenser 110.

In one or more embodiments, when the flask 100 is in the first position, the flask fastening device 130 may grip the flask 100 and fasten the flask 100 to the condenser 110 as illustrated in FIG. 5B. In one or more embodiments, the gripper 232 may rotate about each rotation axis X in the first rotation direction R1 such that the gripping member 2321 grips the outer surface of the flask 100 and pulls the flask 100 to a second position where the flask 100 is fastened to the condenser 110. In the second position, the flask 100 may be connected to the condenser 110 via the flask connector 231. In the first position, the flask 100 may not contact the flask connector 231, and in the second position, the flask 100 may contact the flask connector 231. The gripper 232 may hold the flask 100 in the second position, such that the flask 100 may be fastened to the flask connector 231 and connected to the condenser 110. In the second position, the flask 100 may contact the condenser 110, may be connected to the condenser 110, may be fastened to the condenser 110, etc. In this case, the moving member 233 may move in the second moving direction D2 to allow the rotation of the gripper 232 in the first rotation direction R1. In one or more embodiments, when the flask fastening device 130 moves the flask 100 from the first position of FIG. 5A to the second position of FIG. 5B, the flask support device 140 may maintain a state of supporting the outer surface (i.e., the circumferential surface 104) of the flask 100. In this case, the flask support device 140 may move a position of the flask 100 according to an external force applied to the flask 100 (for example, an external force applied to the flask 100 by the flask fastening device 130), so as not to interfere with a fastening operation of the flask 100 through the flask fastening device 130.

In one or more embodiments, when the flask 100 is fastened to the condenser 110, the sample S may be supplied to the inside of the flask 100 through the sample supplier 113. However, the sample S may be accommodated in the flask 100 before the flask 100 is fastened to the condenser 110. In one or more embodiments, when the sample S is supplied inside the flask 100, the flask 100 may be accommodated in the bath 160 and may be heated.

In one or more embodiments, the bath 160 may move to a position where the flask 100 is to be heated by the stage 170 as illustrated in FIG. 5B. In one or more embodiments, while the bath 160 is supported by the bath support 271, a position of the bath 160 may be adjusted to accommodate the flask 100 through an operation of the second moving member 273 in a direction parallel to the ground and an operation of the first moving member 272 in a direction perpendicular to the ground. In one or more embodiments, a relative position of the flask 100 and the bath 160 may be adjusted by the height adjustment of the condenser 110 according to an operation of the support station 150.

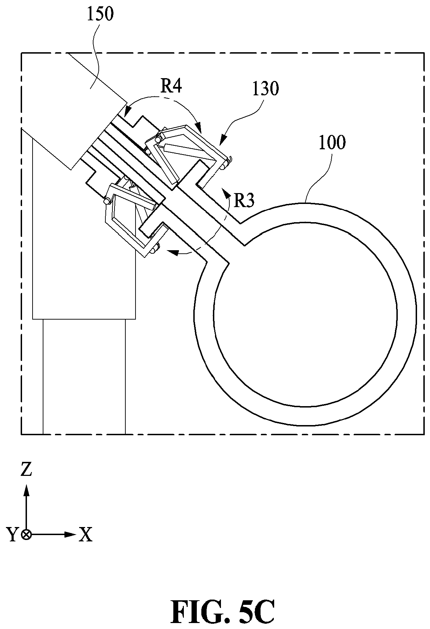

In one or more embodiments, as illustrated in FIG. 5C, while the flask 100 is accommodated in the bath 160, the flask 100 may rotate about the center of its bottleneck 101 in rotation direction R3 or may tilt such that a gradient with respect to the ground changes in rotation direction R4. For example, the flask 100 may rotate in a third rotation direction R3 according to a rotating operation of the rotating member 235. For example, the flask 100 may rotate in a fourth rotation direction R4 and may perform a tilting operation in response to the angle adjustment of the condenser 110 according to an operation of the support station 150 (for example, the angle adjustment of the condenser 110 centered on the first axis A1 perpendicular to the ground). In one or more embodiments, the flask 100 may allow the whole sample S accommodated inside to be evenly heated by performing a rotating operation in the third rotation direction R3 and a tilting operation in the fourth rotation direction R4 in the bath 160. In this case, a bumping phenomenon caused when only a certain portion is heated may be reduced or prevented.

In one or more embodiments, a target substance evaporated from the sample S may flow into the condenser 110 and may be condensed inside the condenser 110. The condensed target substance may be extracted through an extractor 120 connected to the condenser 110.

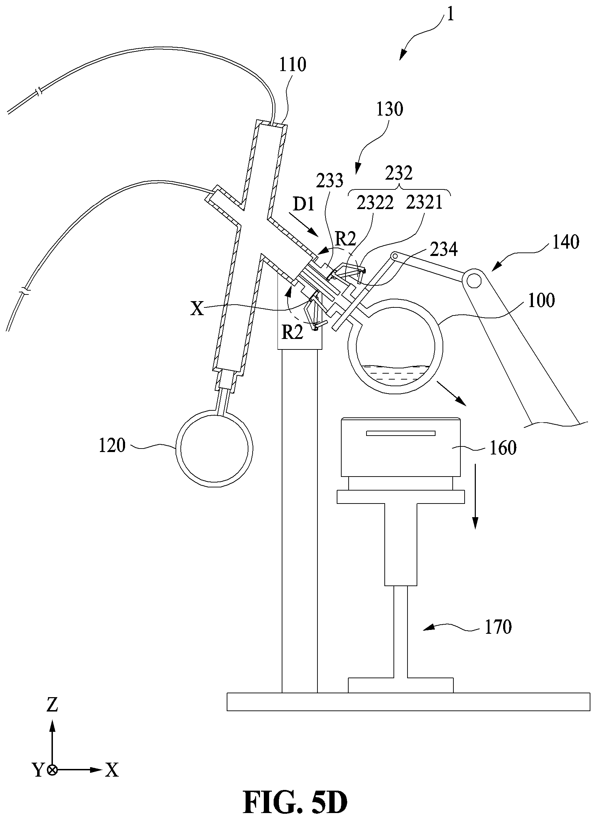

In one or more embodiments, after the separation of the target substance is completed, when separating the flask 100 from the condenser 110, the flask fastening device 130 may push the flask 100 from the second position to the first position as illustrated in FIG. 5D. For example, while translationally moving in the first moving direction D1, the moving member 233 may apply pressure on the pushing member 2322 and may rotate the gripper 232 in the second rotation direction R2. As the gripper 232 rotates in the second rotation direction R2, an end of the pushing member 2322 may push the end (i.e., the circumferential surface 104) of the flask 100, and, as the gripping member 2321 is distanced from the outside of the flask 100, the gripping for the flask 100 may be released. In this case, while maintaining a state of supporting the outer surface (i.e., the circumferential surface 104) of the flask 100, the flask support device 140 may adjust a position of the flask 100 according to a separating operation in which the flask 100 is pushed by the gripper 232 from the condenser 110.

In this structure, in a process where the flask 100 is fastened to or separated from the condenser 110, since only a translational operation in which the flask 100 is pushed in one direction is performed without such operations as rotating or tilting of the flask 100, the occurrence of vibration in a process of fastening the flask 100 to the condenser 110 may be reduced or prevented.

An automatic evaporator system according to one or more embodiments may include a flask configured to accommodate a sample, a bath configured to accommodate the flask and relay heat to the flask, a condenser that includes a sample inlet, in which an inlet is formed, and is configured to receive a target substance evaporated from the flask and condense the received target substance, an extractor that is connected to the condenser and is configured to extract the target substance separated from the sample, and a flask fastening device that is connected to the sample inlet. In one or more embodiments, the flask fastening device may include a flask connector that is mounted to the sample inlet and is configured to communicate the flask with the inlet while the flask connector is fastened to the flask and one or more grippers that are connected to the flask connector and are configured to move the flask between a first position and a second position, in which the first position is separated from the flask connector and the second position is fastened to the flask connector.

In one or more embodiments, the one or more grippers may rotate about each rotation axis with respect to the flask connector in a first rotation direction and a second rotation direction that is opposite to the first rotation direction. In one or more embodiments, a gripper may move the flask from the first position to the second position when rotating in the first rotation direction and may move the flask from the second position to the first position when rotating in the second rotation direction.

In one or more embodiments, the gripper may include a gripping member configured to rotate about the rotation axis and grip the circumferential surface of the flask when rotating in the first rotation direction and a pushing member configured to rotate about the rotation axis and push the flask from the flask connector when rotating in the second rotation direction. In one or more embodiments, the gripping member and the pushing member may integrally rotate about the rotation axis.

In one or more embodiments, while the gripper rotates about the rotation axis, an end of the gripping member may move such that a distance of the end of the gripping member from a central axis of the flask connector changes, and an end of the pushing member may move such that a distance of the end of the pushing member to the central axis changes.

In one or more embodiments, the gripper may be provided in plurality, and a plurality of grippers may be arranged to form an equal angle with respect to the central axis of the flask connector.

In one or more embodiments, the flask fastening device may further include a moving member that is translationally movable in a direction parallel to a central axis of the flask connector and is configured to rotate the gripper about the rotation axis.

In one or more embodiments, the moving member may apply an external force to the gripper and rotate the gripper in the second rotation direction while moving in a first moving direction toward the flask.

In one or more embodiments, the moving member may apply an external force to the gripper and rotate the gripper in the first rotation direction while moving in a second moving direction opposite to the first moving direction.

In one or more embodiments, the flask fastening device may further include an elastic member that is connected to each of the one or more grippers and is configured to apply an elastic force to the gripper such that the gripper rotates in the first rotation direction.

In one or more embodiments, the flask fastening device may further include a rotating member configured to connect the sample inlet to the flask connector and rotate the flask connector with respect to the sample inlet about a central axis of the flask connector.

In one or more embodiments, the automatic evaporator system may further include a flask support device configured to support an outer surface of the flask and move the flask. In one or more embodiments, the flask support device may adjust a position of the flask according to an operation of the flask fastening device while the flask fastening device moves the position of the flask between the first position and the second position.

In one or more embodiments, the flask support device may pivot according to a rotating operation of the flask while supporting the flask.

In one or more embodiments, the automatic evaporator system may further include a support station, in which the support station may include a support on the ground, a column support configured to support the condenser, and a connector configured to connect the support to the column support and rotate the column support with respect to the support about a first axis parallel to the ground.

In one or more embodiments, the support station may further include a height adjuster configured to connect the support to the column support and adjust a position of the column support along a height direction of the support.

In one or more embodiments, the automatic evaporator system may further include a stage configured to adjust a position of the bath, in which the stage may include a bath support configured to support the bath, a first moving member that is connected to the bath support and is movable on a flat surface parallel to the ground, and a second moving member that is connected to the bath support and is movable in a height direction perpendicular to the ground.

A flask fastening device configured to fasten a flask to a condenser may include a flask connector that is mounted to the condenser and includes a connector hole communicating with an inlet of the condenser for sample injections and one or more grippers that are connected to the flask connector and are configured to rotate in both directions about each rotation axis. In one or more embodiments, the one or more grippers may grip the flask to be fastened to the flask connector when rotating in a first rotation direction about the rotation axis and may separate the flask that is fastened to the flask connector from the flask connector when rotating in a second rotation direction opposite to the first rotation direction about the rotation axis.

In one or more embodiments, a gripper may include a gripping member configured to rotate about the rotation axis and move the flask in a connector direction with an end contacting the circumferential surface of a bottleneck of the flask when rotating in the first rotation direction and a pushing member configured to integrally rotate with the gripping member about the rotation axis and push the flask from the flask connector by contacting an end of the bottleneck of the flask when rotating in the second rotation direction.

In one or more embodiments, the flask fastening device may further include a moving member that is connected to the flask connector and is translationally movable in a first moving direction toward the pushing member and a second moving direction opposite to the first moving direction. In one or more embodiments, the moving member may apply pressure to the pushing member and may move the gripper in the second rotation direction when moving in the first moving direction.

In one or more embodiments, the flask fastening device may further include an elastic member configured to connect the flask connector to the gripping member and apply an elastic force to the gripping member such that the gripper rotates in the first rotation direction.

In one or more embodiments, the flask fastening device may further include a rotating member configured to connect the flask connector to the condenser and rotate the flask connector with respect to the condenser.

## Claims

1. An automatic evaporator system (1) comprising:
a flask (100) configured to accommodate a sample;
a bath (160) configured to accommodate the flask and transfer heat to the flask;
a condenser (110) comprising a sample inlet (112), the condenser configured to receive a target substance evaporated from the flask and condense the received target substance;
an extractor (120) connected to the condenser and configured to extract the target substance separated from the sample; and
a flask fastening device (130) connected to the sample inlet and configured to automatically fasten and separate the flask to and from the condenser, the flask fastening device comprising:
a flask connector (231) connected to the sample inlet and configured to connect the flask with the sample inlet while the flask is connected to the flask connector; and
at least one gripper (232) connected to the flask connector and configured to move the flask between a first position and a second position,
wherein, in the first position, the flask is separated from the condenser, and
wherein, in the second position, the flask contacts the flask connector and is held to the flask connector by the at least one gripper, and
**characterized in that** the at least one gripper is further configured to:
rotate about a rotation axis (X) with respect to the flask connector in a first rotation direction (R1) and a second rotation direction (R2) that is opposite to the first rotation direction, wherein the rotation axis is on a surface perpendicular to a central axis (C) of the flask connector;
move the flask from the first position to the second position when rotating in the first rotation direction; and
move the flask from the second position to the first position when rotating in the second rotation direction.

2. The automatic evaporator system of claim 1, wherein the at least one gripper comprises:
a gripping member configured to rotate about the rotation axis and grip a circumferential surface of the flask when rotating in the first rotation direction; and
a pushing member configured to rotate about the rotation axis and push the flask from the flask connector when rotating in the second rotation direction, and
wherein the gripping member and the pushing member integrally rotate about the rotation axis.

3. The automatic evaporator system of claim 2, wherein, while the at least one gripper rotates about the rotation axis:
an end of the gripping member moves such that a distance of the end of the gripping member from a central axis of the flask connector changes, and
an end of the pushing member moves such that a distance of the end of the pushing member to the central axis changes.

4. The automatic evaporator system of claim 1, wherein the at least one gripper comprises a plurality of grippers, and
wherein the plurality of grippers are arranged to form an equal angle with respect to a central axis of the flask connector.

5. The automatic evaporator system of any of claims 1 to 4, wherein the flask fastening device further comprises:
a moving member that is configured to:
move in a direction parallel to a central axis of the flask connector; and
rotate the at least one gripper about the rotation axis.

6. The automatic evaporator system of claim 5, wherein the moving member is further configured to:
apply an external force to the at least one gripper and rotate the at least one gripper in the second rotation direction while moving in a first translation moving direction toward the flask.

7. The automatic evaporator system of claim 6, wherein the moving member is further configured to:
apply an external force to the at least one gripper and rotate the at least one gripper in the first rotation direction while moving in a second translation moving direction opposite to the first translation moving direction.

8. The automatic evaporator system of any of claims 1 to 7, wherein the flask fastening device further comprises:
at least one elastic member respectively connected to each of the at least one gripper, and
wherein the at least one elastic member is configured to apply an elastic force to the at least one gripper such that the at least one gripper rotates in the first rotation direction.

9. The automatic evaporator system of any preceding claim, wherein the flask fastening device further comprises:
a rotating member configured to:
connect the sample inlet to the flask connector; and
rotate the flask connector with respect to the sample inlet about a central axis of the flask connector.

10. The automatic evaporator system of any preceding claim, further comprising:
a flask support device configured to:
move the flask;
support an outer surface of the flask;
adjust a position of the flask based on an operation of the flask fastening device while the flask fastening device moves the flask between the first position and the second position.

11. The automatic evaporator system of claim 10, wherein the flask support device is further configured to pivot based on a rotating operation of the flask while supporting the flask.

12. The automatic evaporator system of any preceding claim, further comprising a support station comprising:
a first support on a ground;
a column support configured to support the condenser; and
a connector connecting the first support to the column support and configured to rotate the column support with respect to the first support about a first axis parallel to the ground.

13. The automatic evaporator system of claim 12, wherein the support station further comprises:
a height adjuster configured to adjust a position of the column support along a height direction of the first support.

## Patentansprüche

1. Automatisches Verdampfersystem (1), umfassend:
einen Kolben (100), der so konfiguriert ist, dass er eine Probe aufnimmt;
ein Bad (160), das so konfiguriert ist, dass es den Kolben aufnimmt und Wärme auf den Kolben überträgt;
einen Kondensator (110), der einen Probeneinlass (112) umfasst, wobei der Kondensator so konfiguriert ist, dass er eine aus dem Kolben verdampfte Zielsubstanz aufnimmt und die aufgenommene Zielsubstanz kondensiert;
einen Extraktor (120), der mit dem Kondensator verbunden und so konfiguriert ist, dass er die von der Probe getrennte Zielsubstanz extrahiert; und
eine Kolbenbefestigungsvorrichtung (130), die mit dem Probeneinlass verbunden und so konfiguriert ist, dass sich der Kolben automatisch an dem Kondensator befestigt und von diesem trennt, wobei die Kolbenbefestigungsvorrichtung Folgendes umfasst:
einen Kolbenverbinder (231), der mit dem Probeneinlass verbunden und so konfiguriert ist, dass er den Kolben mit dem Probeneinlass verbindet, während der Kolben mit dem Kolbenverbinder verbunden ist; und
mindestens einen Greifer (232), der mit dem Kolbenverbinder verbunden und so konfiguriert ist, dass er den Kolben zwischen einer ersten Position und einer zweiten Position bewegt,
wobei in der ersten Position der Kolben vom Kondensator getrennt ist, und
wobei in der zweiten Position der Kolben den Kolbenverbinder berührt und durch den mindestens einen Greifer an dem Kolbenverbinder gehalten wird, und
**dadurch gekennzeichnet, dass** der mindestens eine Greifer ferner so konfiguriert ist, dass er:
sich um eine Rotationsachse (X) in Bezug auf den Kolbenverbinder in einer ersten Rotationsrichtung (R1) und einer zweiten Rotationsrichtung (R2), die der ersten Rotationsrichtung entgegengesetzt ist, dreht, wobei die Rotationsachse auf einer Fläche senkrecht zu einer Mittelachse (C) des Kolbenverbinders verläuft;
den Kolben von der ersten Position in die zweite Position bewegt, bei Drehung in der ersten Rotationsrichtung; und
den Kolben von der zweiten Position in die erste Position bewegt, bei Drehung in der zweiten Rotationsrichtung.

2. Automatisches Verdampfersystem nach Anspruch 1, wobei der mindestens eine Greifer Folgendes umfasst:
ein Greifelement, das so konfiguriert ist, dass es sich um die Rotationsachse dreht und eine Umfangsfläche des Kolbens greift, bei Drehung in der ersten Rotationsrichtung; und
ein Schubelement, das so konfiguriert ist, dass es sich um die Rotationsachse dreht und den Kolben von dem Kolbenverbinder schiebt, bei Drehung in der zweiten Rotationsrichtung, und
wobei sich das Greifelement und das Schubelement einstückig um die Rotationsachse drehen.

3. Automatisches Verdampfersystem nach Anspruch 2, wobei, während sich der mindestens eine Greifer um die Rotationsachse dreht:
ein Ende des Greifelements sich derart bewegt, dass sich ein Abstand des Endes des Greifelements von einer Mittelachse des Kolbenverbinders verändert, und
ein Ende des Schubelements sich derart bewegt, dass sich ein Abstand des Endes des Schubelements zu der Mittelachse verändert.

4. Automatisches Verdampfersystem nach Anspruch 1, wobei der mindestens eine Greifer eine Vielzahl von Greifern umfasst, und
wobei die Vielzahl von Greifern so angeordnet ist, dass sie einen gleichen Winkel in Bezug auf eine Mittelachse des Kolbenverbinders bildet.

5. Automatisches Verdampfersystem nach einem der Ansprüche 1 bis 4, wobei die Kolbenbefestigungsvorrichtung ferner Folgendes umfasst:
ein sich bewegendes Element, das so konfiguriert ist, dass es:
sich in einer Richtung parallel zu einer Mittelachse des Kolbenverbinders bewegt; und
den mindestens einen Greifer um die Rotationsachse dreht.

6. Automatisches Verdampfersystem nach Anspruch 5, wobei das bewegliche Element ferner so konfiguriert ist, dass es:
eine externe Kraft auf den mindestens einen Greifer aufbringt und den mindestens einen Greifer in die zweite Rotationsrichtung dreht, während er sich in einer ersten Translationsbewegungsrichtung auf den Kolben zubewegt.

7. Automatisches Verdampfersystem nach Anspruch 6, wobei das bewegliche Element ferner so konfiguriert ist, dass es:
eine externe Kraft auf den mindestens einen Greifer aufbringt und den mindestens einen Greifer in die erste Rotationsrichtung dreht, während er sich in eine zweite Translationsbewegungsrichtung entgegengesetzt zu der ersten Translationsbewegungsrichtung bewegt.

8. Automatisches Verdampfersystem nach einem der Ansprüche 1 bis 7, wobei die Kolbenbefestigungsvorrichtung ferner Folgendes umfasst:
mindestens ein elastisches Element, das jeweils mit dem mindestens einen Greifer verbunden ist, und
wobei das mindestens eine elastische Element so konfiguriert ist, dass es eine elastische Kraft auf den mindestens einen Greifer ausübt, sodass sich der mindestens eine Greifer in der ersten Rotationsrichtung dreht.

9. Automatisches Verdampfersystem nach einem vorhergehenden Anspruch, wobei die Kolbenbefestigungsvorrichtung ferner Folgendes umfasst:
ein Drehelement, das so konfiguriert ist, dass es:
den Probeneinlass mit dem Kolbenverbinder verbindet; und
den Kolbenverbinder in Bezug auf den Probeneinlass um eine Mittelachse des Kolbenverbinders dreht.

10. Automatisches Verdampfersystem nach einem vorhergehenden Anspruch, ferner umfassend:
eine Kolbenstützvorrichtung, die so konfiguriert ist, dass sie:
den Kolben bewegt;
eine Außenfläche des Kolbens stützt;
eine Position des Kolbens auf Grundlage eines Betriebs der Kolbenbefestigungsvorrichtung einstellt, während die Kolbenbefestigungsvorrichtung den Kolben zwischen der ersten Position und der zweiten Position bewegt.

11. Automatisches Verdampfersystem nach Anspruch 10, wobei die Kolbenstützvorrichtung ferner so konfiguriert ist, dass sie auf Grundlage eines Drehbetriebs des Kolbens schwenkt, während sie den Kolben stützt.

12. Automatisches Verdampfersystem nach einem vorhergehenden Anspruch, ferner umfassend eine Stützstation, umfassend:
eine erste Stütze auf einem Boden;
eine Säulenstütze, die so konfiguriert ist, dass sie den Kondensator stützt; und
ein Verbindungsstück, das die erste Stütze mit der Säulenstütze verbindet und so konfiguriert ist, dass es die Säulenstütze in Bezug auf die erste Stütze um eine erste Achse parallel zum Boden dreht.

13. Automatisches Verdampfersystem nach Anspruch 12, wobei die Stützstation ferner Folgendes umfasst:
einen Höheneinsteller, der so konfiguriert ist, dass er eine Position der Säulenstütze entlang einer Höhenrichtung der ersten Stütze einstellt.

## Revendications

1. Système d'évaporateur automatique (1) comprenant :
un flacon (100) conçu pour loger un échantillon ;
un bain (160) conçu pour loger le flacon et transférer la chaleur au flacon ;
un condenseur (110) comprenant une entrée d'échantillon (112), le condenseur étant conçu pour recevoir une substance cible évaporée du flacon et condenser la substance cible reçue ;
un extracteur (120) connecté au condenseur et conçu pour extraire la substance cible séparée de l'échantillon ; et
un dispositif de fixation de flacon (130) connecté à l'entrée d'échantillon et conçu pour fixer et séparer automatiquement le flacon à et du condenseur, le dispositif de fixation de flacon comprenant :
un connecteur de flacon (231) connecté à l'entrée d'échantillon et conçu pour connecter le flacon à l'entrée d'échantillon pendant que le flacon est connecté au connecteur de flacon ; et
au moins un préhenseur (232) connecté au connecteur de flacon et conçu pour déplacer le flacon entre une première position et une seconde position,
dans lequel, dans la première position, le flacon est séparé du condenseur, et
dans lequel, dans la seconde position, le flacon est en contact avec le connecteur de flacon et est maintenu au connecteur de flacon par l'au moins un préhenseur, et
**caractérisé en ce que** l'au moins un préhenseur est en outre conçu pour :
tourner autour d'un axe de rotation (X) par rapport au connecteur de flacon dans un premier sens de rotation (R1) et un second sens de rotation (R2) qui est opposé au premier sens de rotation, dans lequel l'axe de rotation est sur une surface perpendiculaire à un axe central (C) du connecteur de flacon ;
déplacer le flacon de la première position à la seconde position lors de la rotation dans le premier sens de rotation ; et
déplacer le flacon de la seconde position à la première position lors de la rotation dans le second sens de rotation.

2. Système d'évaporateur automatique selon la revendication 1, dans lequel l'au moins un préhenseur comprend :
un élément de préhension conçu pour tourner autour de l'axe de rotation et saisir une surface circonférentielle du flacon lors de la rotation dans le premier sens de rotation ; et
un élément de poussée conçu pour tourner autour de l'axe de rotation et pousser le flacon hors du connecteur de flacon lors de la rotation dans le second sens de rotation, et
dans lequel l'élément de préhension et l'élément de poussée tournent de manière solidaire autour de l'axe de rotation.

3. Système d'évaporateur automatique selon la revendication 2, dans lequel, tandis que l'au moins un préhenseur tourne autour de l'axe de rotation :
une extrémité de l'élément de préhension se déplace de telle sorte qu'une distance de l'extrémité de l'élément de préhension à partir d'un axe central du connecteur de flacon change, et
une extrémité de l'élément de poussée se déplace de telle sorte qu'une distance de l'extrémité de l'élément de poussée à l'axe central change.

4. Système d'évaporateur automatique selon la revendication 1, dans lequel l'au moins un préhenseur comprend une pluralité de préhenseurs, et
dans lequel la pluralité de préhenseurs sont agencés pour former un angle égal par rapport à un axe central du connecteur de flacon.

5. Système d'évaporateur automatique selon l'une quelconque des revendications 1 à 4, dans lequel le dispositif de fixation de flacon comprend en outre :
un élément mobile qui est configuré pour :
se déplacer dans une direction parallèle à un axe central du connecteur de flacon ; et
faire tourner l'au moins un préhenseur autour de l'axe de rotation.

6. Système d'évaporateur automatique selon la revendication 5, dans lequel l'élément mobile est en outre configuré pour :
appliquer une force externe à l'au moins un préhenseur et faire tourner l'au moins un préhenseur dans le second sens de rotation tout en se déplaçant dans un premier sens de déplacement de translation vers le flacon.

7. Système d'évaporateur automatique selon la revendication 6, dans lequel l'élément mobile est en outre configuré pour :
appliquer une force externe à l'au moins un préhenseur et faire tourner l'au moins un préhenseur dans le premier sens de rotation tout en se déplaçant dans un second sens de déplacement de translation opposé au premier sens de déplacement de translation.

8. Système d'évaporateur automatique selon l'une quelconque des revendications 1 à 7, dans lequel le dispositif de fixation de flacon comprend en outre :
au moins un élément élastique respectivement connecté à chacun de l'au moins un préhenseur, et
dans lequel l'au moins un élément élastique est conçu pour appliquer une force élastique à l'au moins un préhenseur de telle sorte que l'au moins un préhenseur tourne dans le premier sens de rotation.

9. Système d'évaporateur automatique selon l'une quelconque des revendications précédentes, dans lequel le dispositif de fixation de flacon comprend en outre :
un élément rotatif configuré pour :
connecter l'entrée d'échantillon au connecteur de flacon ; et
faire tourner le connecteur de flacon par rapport à l'entrée d'échantillon autour d'un axe central du connecteur de flacon.

10. Système d'évaporateur automatique selon l'une quelconque des revendications précédentes, comprenant en outre :
un dispositif de support de flacon conçu pour :
déplacer le flacon ;
supporter une surface externe du flacon ;
ajuster une position du flacon en fonction d'un fonctionnement du dispositif de fixation du flacon tandis que le dispositif de fixation du flacon déplace le flacon entre la première position et la seconde position.

11. Système d'évaporateur automatique selon la revendication 10, dans lequel le dispositif de support de flacon est en outre conçu pour pivoter sur la base d'une opération de rotation du flacon tout en supportant le flacon.

12. Système d'évaporateur automatique selon l'une quelconque des revendications précédentes, comprenant en outre une station de support comprenant :
un premier support au sol ;
un support de colonne conçu pour supporter le condenseur ; et
un connecteur connectant le premier support au support de colonne et conçu pour faire tourner le support de colonne par rapport au premier support autour d'un premier axe parallèle au sol.

13. Système d'évaporateur automatique selon la revendication 12, dans lequel la station de support comprend en outre :
un dispositif de réglage en hauteur conçu pour régler une position du support de colonne selon un sens de la hauteur du premier support.
